# FASCICULE DE BREVET EUROPEEN

(11) **EP 4 260 001 B1**
(45) Date de publication et mention de la délivrance du brevet: **06.08.2025**
(21) Numéro de dépôt: 21827401.7
(22) Date de dépôt: 30.11.2021
(51) Int. Cl.: G01B 5/30, G01B 7/16, G01B 11/16, G01B 17/04, G01L 1/24, G01L 5/162, G01L 5/1627, G01L 5/166, G01M 5/00, G01M 11/08

(54) **DISPOSITIF TRIDIMENSIONNEL DE MESURE DES DEFORMATIONS LOCALES**
DREIDIMENSIONALE VORRICHTUNG ZUR MESSUNG VON LOKALEN VERFORMUNGEN
THREE-DIMENSIONAL DEVICE FOR MEASURING LOCAL DEFORMATIONS

(30) Priorité: 11.12.2020 FR 2013104
(43) Date de publication de la demande: 18.10.2023
(73) Titulaire: Nantes Université, 44000 Nantes (FR)
(72) Inventeur: LECIEUX, Yann, 44100 Nantes (FR); LEDUC, Dominique, 44000 Nantes (FR); LUPI, Cyril, 44300 Nantes (FR); GUIGOT, Corentin, 44100 Nantes (FR); FRANCOIS, Marc, 44000 Nantes (FR)
(74) Mandataire: Novagraaf Technologies
(86) Numéro de dépôt international: PCT/FR2021/052149
(87) Numéro de publication internationale: WO 2022/123144

(56) Documents cités:
- CN-A- 102 365 698
- CN-A- 106 500 889
- US-A1- 2013 147 743
- GUIGOT CORENTIN ET AL: "Whispering gallery modes for in-situ measurement of strain tensor", 2019 21ST INTERNATIONAL CONFERENCE ON TRANSPARENT OPTICAL NETWORKS (ICTON), IEEE, 19 September 2019 (2019-09-19), pages 1 - 4, XP033618001, DOI: 10.1109/ICTON.2019.8840236
- FRANÇOIS M L M ET AL: "An Embedded 3D Strain Tensor Sensor Based on the Eshelby's Inclusion", EXPERIMENTAL MECHANICS, SPRINGER NEW YORK LLC, US, vol. 57, no. 5, 15 March 2017 (2017-03-15), pages 801 - 811, XP036221860, ISSN: 0014-4851, [retrieved on 20170315], DOI: 10.1007/S11340-017-0266-2
- FRANÇOIS M.L.M ET AL: "A 6-ring embedded strain sensor", HAL ARCHIVES OUVERTES, 30 June 2021 (2021-06-30), XP055828034, Retrieved from the Internet <URL:hal.archives-ouvertes.fr/hal-03274450> [retrieved on 20210727]

## Description

La présente invention concerne de manière générale un dispositif tridimensionnel de mesure des déformations locales, qui est noyé à l'intérieur d'une structure, et plus particulièrement pour déterminer le tenseur de déformation subi par cette structure.

### Arrière-plan technique

Les structures qui sont utilisées très couramment en architecture, dans les ouvrages de génie civil ainsi que généralement dans les domaines liés à la mécanique subissent des contraintes mécaniques qui peuvent évoluer au cours du temps. Ces contraintes provoquent des déformations dans le volume de ces structures ce qui peut aboutir à altérer leurs caractéristiques mécaniques. Pour assurer un suivi des propriétés de ces structures il est nécessaire de pouvoir mesurer l'évolution des déformations qui se produisent dans le volume de ces structures.

L'évolution des déformations des structures et l'estimation des contraintes qui s'exercent sur celles-ci peuvent être suivies par des dispositifs placés sur la surface externe des structures tels que des témoins visuels pour les déformations ou des capteurs mécaniques sensibles à la déformation à la surface de ces structures (FR2855210). La mesure de la déformation à l'intérieur même du volume peut être estimée en intégrant un capteur uniaxial ou « fibre de mesure » tel qu'une fibre optique dans le volume même de la structure (WO2006127034). Ces méthodes cependant ne permettent au mieux de n'estimer qu'une moyenne selon l'axe du capteur des composantes des contraintes ou des déformations s'exerçant dans une fibre placée dans le volume surveillé. Enfin, l'intégration directement dans le volume surveillé d'un capteur peut aboutir à des affaiblissements de la structure qui peuvent être dus à la différence de propriétés mécanique des matériaux composant le capteur, ou bien à modifier la distribution des contraintes dans le volume de la structure à proximité du capteur. Dans ce dernier cas la forme particulière du capteur peut conduire à des concentrations locales des contraintes propices à l'amorçage de fissure au voisinage de ce capteur. Par ailleurs la modification de la distribution des contraintes au voisinage même du capteur est nuisible à la qualité de la mesure, qui risque de ne pas refléter idéalement les grandeurs que l'on souhaite mesurer, ce qui peut aboutir à utiliser ces capteurs comme alertes de seuils plutôt que comme systèmes pour effectuer des mesures quantitatives.

Pour améliorer la qualité et la fiabilité de la mesure des contraintes et des déformations s'exerçant localement à l'intérieur d'un volume, le demandeur a alors mis au point un capteur tridimensionnel noyé au cœur d'une structure hôte pour mesurer localement les 6 composantes du tenseur de déformation de cette structure. Ce capteur tridimensionnel a fait l'objet d'une demande internationale (WO2014140496). Il est basé sur le principe de l'utilisation d'un corps d'épreuve de forme ellipsoïdale, et de préférence sphérique en matériau élastique homogène aux propriétés mécaniques connues et destiné à être inclus dans ladite structure hôte. A titre de moyens de mesure de la déformation, WO2014140496 décrit l'utilisation d'une fibre de mesure de déformation attachée à l'intérieur du corps d'épreuve, pour transmettre des déformations du corps d'épreuve à la fibre de mesure. Le capteur de déformation de WO2014140496 est basé sur le problème de l'inclusion d'Eshelby^{[1, 2]} qui propose un cadre théorique complet permettant d'évaluer les déformations d'un milieu hôte (ou matrice) qui existerait dans la matrice en l'absence du capteur, à partir de la mesure du champ de déformation dans la sphère élastique (l'inclusion). WO2014140496 décrit plus particulièrement des capteurs de déformation radiaux basés sur l'assemblage de fibres optiques traversant un corps d'épreuve sphérique. Les capteurs utilisés et mis au point par le Demandeur pour l'invention objet de la demande internationale WO2014140496 sont des réseaux de Bragg fibrés qui ont une longueur active typiquement de l'ordre de 10 mm pour un diamètre de 250 µm. Ils doivent être collés de part et d'autre du réseau de Bragg fibré, typiquement sur une longueur de 15 mm environ. Ainsi, avec la technologie à fibres traversantes, il est pratiquement impossible de réduire le diamètre du corps d'épreuve à moins de 40 mm. Cela interdit de facto l'usage du capteur à toutes les applications au vivant, ou à l'étude de l'écoulement dans les fluides, deux domaines pour lesquels la mesure de déformation multiaxes présente un intérêt majeur. D'un autre côté, cela limite également l'usage à des domaines nécessitant l'utilisation d'un capteur de plus grande dimension (par exemple en mécanique des sols). Il en effet très complexe d'usiner un trou de logement d'une fibre (ici de 250 µm) pour lequel l'élancement (i.e. le rapport longueur sur diamètre) est important.

Afin de remédier à ces inconvénients, le Demandeur a développé, en alternative au capteur tridimensionnel de WO2014140496 à base de capteurs de déformation radiaux, et au capteur tridimensionnel proposé dans l'article "Whispering gallery modes for in-situ measurement of strain tensor" par Corentin Guigot *et al.,* mettant en œuvre des modes de galerie, un dispositif tridimensionnel de mesure des déformations locales d'une structure hôte. Ce dispositif tridimensionnel est également noyé à l'intérieur d'une structure et basé sur le principe de l'utilisation d'un corps d'épreuve sphérique en matériau élastique homogène aux propriétés mécaniques connues muni de capteurs de déformation. De même que WO2014140496, le dispositif tridimensionnel faisant l'objet de la présente invention est également basé sur le problème de l'inclusion d'Eshelby^{1, 2}. A la différence du capteur tridimensionnel de WO2014140496, les capteurs de déformation sont assemblés de manière tangentielle, en étant enroulés à la surface d'une sphère pour mesurer des variations de six périmètres formés par l'intersection entre la sphère (corps d'épreuve du dispositif tridimensionnel) et six plans différents (au sens des plans vectoriels). Avec le dispositif tridimensionnel de mesure selon l'invention, la mesure de la déformation de la sphère corps d'épreuve est réalisée par la mesure des variations des périmètres, et non par la mesure de déformations à l'aide de capteurs unidirectionnels.

### Résumé de l'invention

Plus particulièrement, la présente invention a pour objet un dispositif tridimensionnel pour mesurer localement les déformations d'une structure hôte constituée d'un matériau solide, liquide, visqueux ou gazeux, ledit dispositif comprenant
- un corps d'épreuve ayant la forme d'une sphère S de centre O constitué d'un matériau élastique homogène aux propriétés mécaniques connues, ledit corps d'épreuve étant destiné à être inclus dans ladite structure hôte,
- des moyens de mesure de déformation attachés audit corps d'épreuve de manière à ce que les déformations subies par ledit corps d'épreuve soient transmises auxdits moyens de mesure de déformation,
- un système de mesure adapté pour d'une part détecter des signaux provenant des moyens de mesure qui sont représentatifs des déformations des moyens de mesure de déformation, et pour d'autre part pour déterminer les déformations locales de ladite structure hôte à partir des signaux détectés et des propriétés mécaniques connues des matériaux du corps d'épreuve, et éventuellement de la structure hôte,
- des moyens de liaison des moyens de mesure de déformation audit système de mesure,

ledit dispositif étant caractérisé en ce que lesdits moyens de mesure de déformation sont constitués par un capteur de déformation tridimensionnel comportant au moins six capteurs tangentiels qui décrivent des cercles de périmètres Li définis par l'intersection entre-des plans Pi et ladite sphère, lesdits plans Pi étant distincts (au sens des plans vectoriels), i étant un entier variant entre 1 et 6, lesdits capteurs tangentiels étant des anneaux physiques constitués de fibres optiques, ou de câbles électriques ou de câbles piézoélectriques, lesdits anneaux physiques étant reliés par des connexions audit système de mesure, lesdits capteurs tangentiels étant aptes pour donner une mesure des variations ΔLi du périmètre Li lorsque ledit corps d'épreuve subit un champ de déformation homogène, le tenseur de déformation ε subi par ledit corps d'épreuve étant un tenseur symétrique déterminé par la relation matricielle
{ε}=|Q|{ΔL}, avec {ε} définissant le vecteur de dimension 6 regroupant les six termes inconnus du tenseur de déformation ε, Q définissant une matrice carrée 6 x 6 inversible, dépendant uniquement de l'orientation des plans Pi et donc indépendante de ladite structure hôte et de son état de déformation ε₀ et {ΔL} étant un vecteur de dimension 6 ayant comme composantes les variations ΔLi,
ledit dispositif étant également caractérisé en ce que ledit système est adapté pour calculer analytiquement le tenseur de déformation ε₀ subi par ladite structure hôte à partir du tenseur de déformation ε.

En ce qui concerne la structure hôte, celle-ci est constituée d'un matériau solide, liquide, visqueux ou gazeux, dans lequel le capteur tridimensionnel est inséré (s'il est solide) ou noyé (s'il est liquide, visqueux ou gazeux). Si la structure hôte est un liquide ou un gaz, il n'est pas nécessaire de connaitre ses propriétés pour mesurer le champ de pression. Si la structure hôte est un solide, il sera possible de calculer analytiquement le tenseur de déformation ε₀ subi par la structure hôte ε avec exactitude dès lors que les propriétés mécaniques de la structure hôte sont connues.

En ce qui concerne le corps d'épreuve, celui-ci est constitué d'un matériau élastique homogène propriétés mécaniques connues. A titre de matériaux utilisables pour le corps d'épreuve, on peut notamment citer les matériaux métalliques (tels que les aciers, l'aluminium et ses alliages), les verres, les polymères et les bétons.

Pour déterminer le tenseur de déformation ε subi par le corps d'épreuve de forme sphérique du dispositif tridimensionnel selon l'invention, on considère que ce dernier subit un champ de déformation homogène, selon la théorie d'Ehselby^{1, 3}. Le corps d'épreuve est encerclé par au moins 6 capteurs tangentiels (sous forme de cercles) numérotés i, i étant un entier naturel variant de 1 à 6, qui sont chacun aptes à donner une mesure des variations ΔLi du périmètre Li lorsque ledit corps d'épreuve subit un champ de déformation homogène, à partir desquelles on calcule les variations relatives ΔLi/Li. Les cercles sont définis par l'intersection entre-la sphère S et des plans Pi distinct, qui peuvent passer par le centre O de la sphère (corps d'épreuve). Pour obtenir les six composantes du tenseur de déformationε, il est nécessaire d'effectuer un minimum de 6 mesures de périmètres Li. Le choix des plans Pi doit être fait de manière à obtenir une matrice carrée 6 x 6 inversible. Parmi toutes les combinaisons possibles, on optera de préférence pour une répartition des capteurs tangentiels telle que ceux-ci sont disposés dans des plans perpendiculaires aux normales des faces d'un dodécaèdre régulier de même centre O que la sphère S.

Pour ce premier mode de réalisation, les anneaux physiques peuvent être reliés entre eux en un point unique U par les connexions, qui sont rassemblées en une gaine centrale reliée au système de mesure.

Pour ce premier mode de réalisation, on pourra utiliser un système de mesure adapté pour stimuler les capteurs tangentiels.

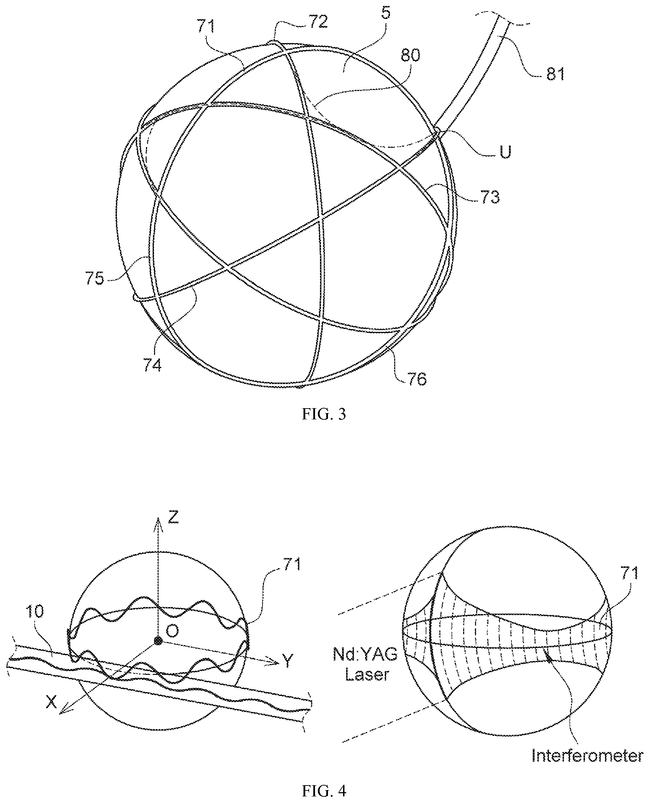

De manière avantageuse, le corps d'épreuve peut être constitué d'une sphère pleine, comme illustré sur les figures 3 à 6 commentées ci-après dans la description détaillée des figures.

Selon un mode de réalisation avantageux du dispositif selon l'invention, ce dernier peut être configuré comme suit : la structure hôte est constituée d'un matériau mis en forme à froid, et le capteur tridimensionnel est constitué par 6 anneaux disposés de manière à former une structure définissant la sphère S de centre O, chaque anneau étant muni d'un capteur tangentiel constitué d'une fibre optique, ou d'un câble électrique ou d'un câble piézoélectrique et la structure du capteur tridimensionnel fait office de corps d'épreuve. Ce mode de réalisation peut en particulier être utilisé pour l'étude de matériaux moulés à froid (Béton, géo polymère, résines).

Dans le cadre de ce mode de réalisation, on peut utiliser pour la structure hôte des matériaux choisis parmi les bétons et les polymères, qui sont des matériaux pouvant être moulés à froid.

### Brève description des figures

D'autres avantages et particularités de la présente invention résulteront de la description qui va suivre, donnée à titre d'exemple non limitatif et faite en référence aux dessins annexes dans lesquels :

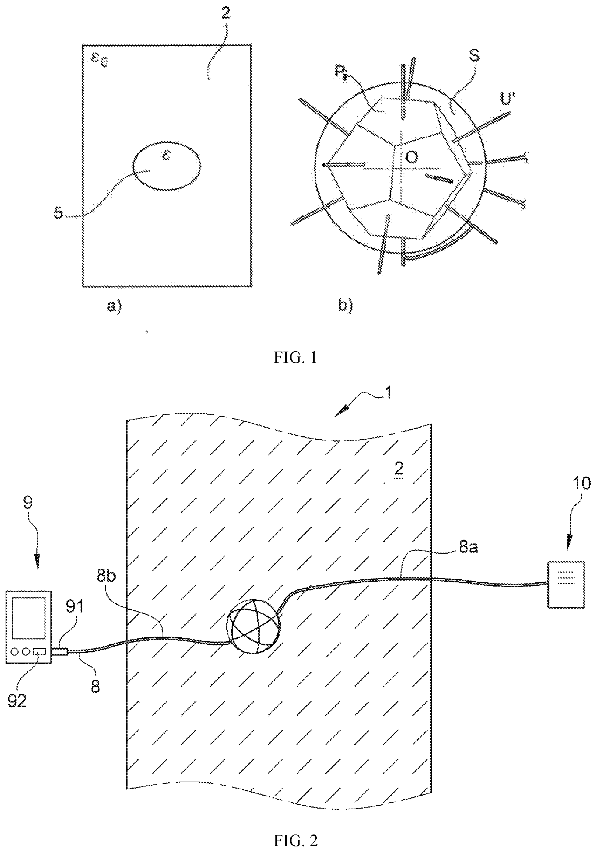

[Fig. 1] : la figure 1 comprend un schéma a) montrant schématiquement l'insertion d'un corps d'épreuve sphérique (dit inclusion) dans un milieu homogène élastique ou matrice (dit structure hôte), et un schéma b) de principe du capteur tridimensionnel du dispositif selon l'invention ;
[Fig. 2] : la figure 2 illustre schématiquement un premier mode de réalisation du dispositif selon l'invention ;
[Fig. 3] : la figure 3 illustre schématiquement le capteur de déformation tridimensionnel du dispositif selon l'invention selon le premier mode de réalisation illustré en figure 2, dans lequel le capteur de déformation tridimensionnel est constitué de six capteurs tangentiels sous forme d'anneaux physiques ;
[Fig. 4] : la figure 4 illustre schématiquement deux variantes non revendiquées du capteur de déformation tridimensionnel du dispositif : la photographie de gauche montre une première variante de réalisation selon laquelle les capteurs tangentiels sont remplacés par la mesure d'ondes optiques de type modes de galerie, tandis que la photographie de droite montre une deuxième variante de réalisation selon laquelle les capteurs tangentiels sont remplacés par la mesure d'ondes élastiques de types modes de galerie qui sont chacune générées par une ligne piézoélectrique piézoélectrique ;

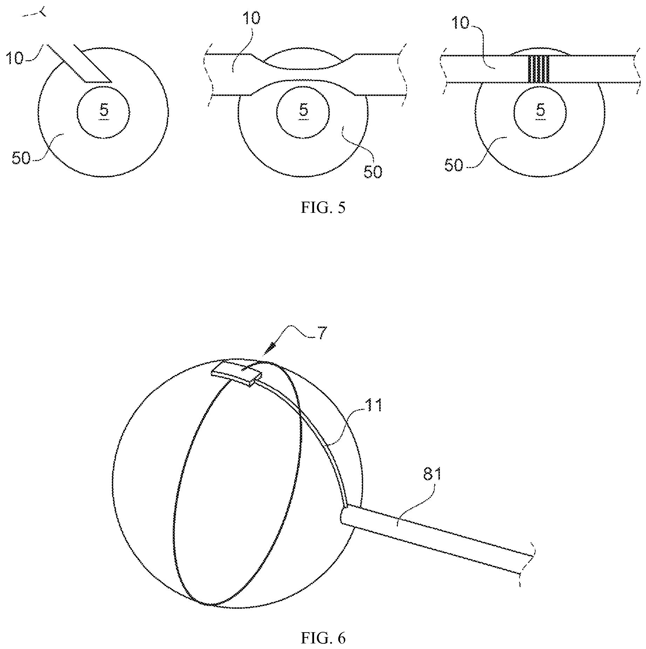

[Fig. 5] : la figure 5 illustre plus particulièrement la première variante de réalisation de l'exemple non revendiqué illustré sur la figure 4, montrant en particulier un dispositif d'injection-réception d'ondes optiques ;
[Fig. 6] : la figure 6 illustre plus particulièrement la deuxième variante de réalisation de l'exemple non revendiqué illustré sur la figure 4, montrant la mesure d'ondes élastiques générées par une ligne piézoélectrique 11 piézoélectrique (dont une seule étant représentée sur la figure 6 par souci de clarté) ;

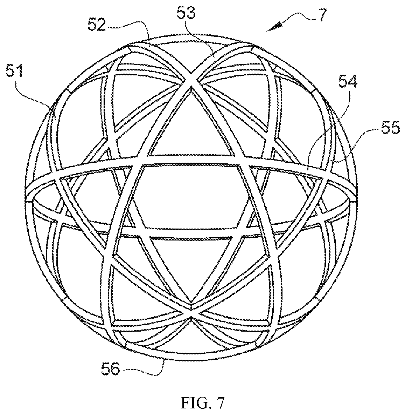

[Fig. 7] : la figure 7 illustre schématiquement le capteur de déformation tridimensionnel du dispositif selon l'invention selon un mode de réalisation, dans lequel le capteur tridimensionnel est constitué par 6 anneaux constitués du matériau de structure hôte et disposés de manière à former une sphère.

### Description détaillée de l'invention

[Fig. 1] représente, en 1a, schématiquement un milieu homogène élastique ou matrice (dit structure hôte) 2 dont on souhaite déterminer localement l'état de déformation. La structure 1 est par exemple une structure rigide, telle qu'une structure de génie civil, notamment constituée de béton, le cas échéant évidé et/ou renforcé par endroits. Comme visible sur la figure 1, la structure hôte 2 comporte un évidement de forme sphérique, adapté pour recevoir un corps d'épreuve 5 tel qu'il sera décrit plus loin. Le principe du dispositif selon l'invention est la détermination du tenseur de déformation ε₀ du milieu hôte 2 à partir du tenseur de déformation ε dans la sphère élastique du corps d'épreuve 5. [Fig. 1] représente, en 1b, un schéma de principe du capteur tridimensionnel du dispositif selon l'invention, montrant en particulier un corps d'épreuve sphérique à l'intérieur duquel on a représenté les faces d'un dodécaèdre régulier (fictif) de même centre O que la sphère S (dodécaèdre fictif), dont les normales sont perpendiculaires aux plans Pi contenant les capteurs (il s'agit d'un mode de répartition préférentiel des capteurs tangentiels qui sera décrit plus loin en relation avec la figure 3.

[Fig. 2] complète la représentation schématique de [Fig. 1] au niveau du schéma 1a en montrant l'ensemble du dispositif tridimensionnel 1 selon l'invention, dans lequel le corps d'épreuve sphérique muni d'un capteur de déformation tridimensionnel 7 comportant six capteurs tangentiels 71, 72, 73, 74, 75, 76 reliés à système de mesure 9 (ou zone d'instrumentation).

[Fig. 3] montre plus en détail le capteur de déformation tridimensionnel de la figure 2 ; dans lequel les six capteurs tangentiels 71, 72, 73, 74, 75, 76, se présentent sous forme d'anneaux physiques constitués de fibres optiques, ou de câbles électriques ou de câbles piézoélectriques. Ces anneaux physiques sont regroupés en un même point U grâce à des tronçons de connexions 80 pour être assemblés dans une gaine centrale 81 reliée à la zone d'instrumentation 9.

La première version du capteur de déformation 3D consiste à coller 6 capteurs unidirectionnels selon les périmètres d'une sphère. Ces capteurs qui sont en fait 6 câbles (optiques, électriques ou piézoélectrique) sont regroupés en un même point grâce à des tronçons de connexions pour être assemblés dans une unique gaine. Chacun de ces capteurs est contenu dans un plan Pi passant par le centre de la sphère S et perpendiculaire à la normale (désignée par i = 1, 2, 3, 4,5 ou 6 sur la figure 3) d'un dodécaèdre régulier de même centre O que la sphère S.

Une alternative non revendiquée à l'usage de capteurs sous forme de câbles collés à la surface d'une sphère est illustrée par [Fig. 4] : cette alternative consiste à injecter des ondes dans le corps d'épreuve sphérique 5 pour leur faire décrire les périmètres de longueur Li : il peut s'agir d'onde optiques 71 comme illustré sur le schéma de gauche de [Fig. 4] et décrit dans la publication scientifique de S. Arnold et al.⁴, ou il peut s'agir d'ondes mécaniques 71, comme illustré sur le schéma de droite de [Fig. 4] et décrit dans la publication scientifique de D. Clorennec et D. Royer⁵. Le gain escompté est principalement la miniaturisation du dispositif selon l'invention 1.

Dans le cas où l'on injecte des ondes optiques, on utilise des dispositifs d'injection-réception d'ondes optiques de type capteurs à fibre optique 10, tels qu'illustrés sur [Fig. 5]. Sur la figure 5, les capteurs à fibre optique 10 sont couplés au corps d'épreuve 5, qui est revêtu d'une couche tampon 50 fixant la fibre optique 10 et dont l'épaisseur est supérieure à la longueur d'onde λ, la couche tampon 50 présentant des propriétés mécaniques identiques à celles du corps d'épreuve 5 et un indice de réfraction connu Plusieurs géométries d'émetteurs récepteurs optiques sont données : sur le schéma de gauche de la figure 5, le couplage avec le corps d'épreuve 5 est réalisé par l'extrémité de la fibre optique 10, tandis que sur le schéma central, il est réalisé à l'aide d'une fibre optique 10 effilée. Le couplage peut aussi être réalisé par réseau (schéma de droite de la figure 5).

[Fig. 6] montre un capteur de déformation tridimensionnel 7 non revendiqué constitué de capteurs tangentiels (un seul étant représenté sur la figure 6 par souci de clarté) qui sont basés sur la mesure d'ondes élastiques générées par une ligne piézoélectrique 11. Le gain escompté avec cette architecture est principalement l'amélioration des performances métrologiques du dispositif. Ces capteurs piézoélectriques peuvent être de technologie similaire à ceux décrit sur les figures 2 à 6, le corps d'épreuve est constitué d'une sphère pleine.

Une alternative selon l'invention, illustrée par [Fig. 7] consiste à ne plus utiliser de sphère pleine à titre de corps d'épreuve 5, mais seulement des anneaux élastiques. Cette solution est utilisable pour les matériaux moulés à froid à titre de structures hôtes 2, tels que des bétons, des géopolymères, ou des résines. Dans un tel mode de réalisation, le capteur tridimensionnel 7 est constitué par 6 anneaux 51, 52, 53, 54, 55, 56 disposés de manière à former une structure 5' définissant la sphère S de centre O et faisant office de corps d'épreuve. Chaque anneau 51, 52, 53, 54, 55, 56 est muni d'un capteur tangentiel 71, 72, 73, 74, 75, 76 constitué d'une fibre optique, ou d'un câble électrique ou d'un câble piézoélectrique.

### LISTE DES REFERENCES

*1. "*The elastic field outside an ellipsoidal inclusion", by Eshelby John Douglas and Peierls Rudolf Ernst, Proceedings of the Royal Society of London. Series A. Mathematical and Physical Sciences, 252(1271):561-569, October 1959.
*2. "*An Embedded 3D Strain Tensor Sensor Based on the Eshelby's Inclusion" by M. L. M. François, Y. Lecieux, D. Leduc, C. Lupi, and E. Rozière, Experimental Mechanics, 57(5):801-811, June 2017.
*3. "*The détermination of the elastic field of an ellipsoïdal inclusion and related problems" by J. D. Eshelby, Proceedings of the Royal Society of London, Vol. 241, (1957), pp. 376- 396.
*4. "*Shift of whispering-gallery modes in microspheres by protein adsorption" by S. Arnold, M. Khoshsima, I. Teraoka, S. Holler, and F. Vollmer, Opt. Lett. 28, 272-274 (2003).
*5 "*Investigation of surface acoustic wave propagation on a sphere using laser ultrasonics" by D. Clorennec et D. Royer, Applied physics letters 85 (2004), p. 2435-2437.

## Revendications

1. Dispositif tridimensionnel (1) pour mesurer localement les déformations d'une structure hôte (2) constituée d'un matériau solide, liquide, visqueux ou gazeux, ledit dispositif(1) comprenant :
- un corps d'épreuve (5) ayant la forme d'une sphère (S) de centre (O) constitué d'un matériau élastique homogène propriétés mécaniques connues, ledit corps d'épreuve (5) étant destiné à être inclus dans ladite structure hôte (2),
- des moyens de mesure de déformation (7) attachés audit corps d'épreuve (5) de manière que les déformations subies par ledit corps d'épreuve (5) soient transmises auxdits moyens de mesure de déformation (7), et
- un système de mesure (9) adapté pour d'une part détecter des signaux provenant desdits moyens de mesure (7) qui sont représentatifs des déformations desdits moyens de mesure de déformation (7), et pour d'autre part déterminer les déformations locales de ladite structure hôte (2) à partir des signaux détectés et des propriétés mécaniques connues des matériaux du corps d'épreuve (5) et éventuellement de la structure hôte (1),
- des moyens de liaison (8, 80, 81) desdits moyens de mesure de déformation (7) audit système de mesure (9),
ledit dispositif (1) étant **caractérisé en ce que** lesdits moyens de mesure de déformation (7) sont constitués par un capteur de déformation tridimensionnel comportant au moins six capteurs tangentiels (71, 72, 73, 74, 75, 76) qui décrivent des cercles de périmètres Li définis par l'intersection entre-des plans (Pi) et ladite sphère (S), lesdits plans (Pi) étant distincts, i étant un entier variant entre 1 et 6, lesdits capteurs tangentiels (71, 72, 73, 74, 75, 76) étant des anneaux physiques constitués de fibres optiques, ou de câbles électriques ou de câbles piézoélectriques, lesdits anneaux physiques (71, 72, 73, 74, 75, 76) étant reliés par des connexions (80) audit système de mesure (9), lesdits capteurs tangentiels (71, 72, 73, 74, 75, 76) étant aptes pour donner une mesure des variations ΔLi du périmètre Li lorsque ledit corps d'épreuve (5) subit un champ de déformation homogène, le tenseur de déformation ε subi par ledit corps d'épreuve (5) étant un tenseur symétrique déterminé par la relation matricielle {ε}=|Q|{ΔL}, avec {ε} définissant le vecteur de dimension 6 regroupant les six termes inconnus du tenseur de déformation ε, Q définissant une matrice carrée 6 x 6 inversible, dépendant uniquement de l'orientation des plans (Pi) et donc indépendante de ladite structure hôte (2) et de son état de déformation ε₀ et {ΔL} étant un vecteur de dimension 6 ayant comme composantes les variations ΔLi,
ledit dispositif (1) étant également **caractérisé en ce que** ledit système de mesure (9) est adapté pour calculer analytiquement le tenseur de déformation ε₀ subi par ladite structure hôte (2) à partir du tenseur de déformation ε.

2. Dispositif tridimensionnel (1) selon la revendication 1, dans lequel lesdits plans (Pi) passent par le centre (O) dudit corps d'épreuve (5).

3. Dispositif tridimensionnel (1) selon la revendication 2, dans lequel lesdits capteurs tangentiels (71, 72, 73, 74, 75, 76) sont disposés dans des plans perpendiculaires aux normales des faces d'un dodécaèdre régulier de même centre (O) que ladite sphère (S).

4. Dispositif tridimensionnel (1) selon l'une quelconque des revendications 1 à 3, dans lequel lesdits anneaux physiques (71, 72, 73, 74, 75, 76) sont reliés entre eux un point unique (U) par lesdites connexions (80), lesdites connexions (80) étant rassemblées en une gaine centrale (81) reliée audit système de mesure (9).

5. Dispositif tridimensionnel (1) selon l'une quelconque des revendications 1 à 4, dans lequel ledit système (9) de mesure est adapté pour stimuler lesdits capteurs tangentiels (71, 72, 73, 74, 75, 76).

6. Dispositif tridimensionnel (1) selon l'une quelconque des revendications 1 à 5, dans lequel ledit corps d'épreuve (5) est une sphère pleine.

7. Dispositif tridimensionnel (1) selon l'une quelconque des revendications 1 à 5 dans lequel ladite structure hôte (2) est constituée d'un matériau mis en forme à froid, le corps d'épreuve (5) étant constitué par 6 anneaux (51, 52, 53, 54, 55, 56) disposés de manière à former une structure (5') définissant la sphère (S) de centre (O), chaque anneau (51, 52, 53, 54, 55, 56) étant muni d'un capteur tangentiel (71, 72, 73, 74, 75, 76) constitué d'une fibre optique, ou d'un câble électrique ou d'un câble piézoélectrique, ladite structure (5') faisant office de corps d'épreuve (5).

## Patentansprüche

1. Dreidimensionale Vorrichtung (1) zum lokalen Messen der Verformungen einer Wirtsstruktur (2) aus einem festen, flüssigen, viskosen oder gasförmigen Material, wobei die Vorrichtung (1) umfasst:
- einen Prüfkörper (5) in Form einer Kugel (S) mit Mittelpunkt (O) aus einem homogenen elastischen Material mit bekannten mechanischen Eigenschaften, wobei der Prüfkörper (5) dazu bestimmt ist, in die Wirtsstruktur (2) integriert zu werden,
- Verformungsmessmittel (7), die an dem Prüfkörper (5) angebracht sind, so dass die Verformungen, denen der Prüfkörper (5) unterliegt, an die Verformungsmessmittel (7) übertragen werden, und
- ein Messsystem (9), das dazu eingerichtet ist, einerseits von den Messmitteln (7) stammende Signale zu erfassen, die für die Verformungen der Verformungsmessmittel (7) repräsentativ sind, und andererseits aus den erfassten Signalen und den bekannten mechanischen Eigenschaften der Materialien des Prüfkörpers (5) und gegebenenfalls der Wirtsstruktur (1) die lokalen Verformungen der Wirtsstruktur (2) zu bestimmen,
- Verbindungsmittel (8, 80, 81) zur Verbindung der Verformungsmessmittel (7) mit dem Messsystem (9),
wobei die Vorrichtung (1) **dadurch gekennzeichnet ist, dass** die Verformungsmessmittel (7) aus einem dreidimensionalen Verformungssensor bestehen, der mindestens sechs Tangentialsensoren (71, 72, 73, 74, 75, 76) umfasst, die Kreise mit Umfängen Li beschreiben, die durch den Schnittpunkt zwischen Ebenen (Pi) und der Kugel (S) definiert sind, wobei die Ebenen (Pi) verschieden sind, i eine ganze Zahl zwischen 1 und 6 ist, wobei die Tangentialsensoren (71, 72, 73, 74, 75, 76) physikalische Ringe sind, die aus optischen Fasern oder elektrischen Kabeln oder piezoelektrischen Kabeln bestehen, wobei die physikalischen Ringe (71, 72, 73, 74, 75, 76) durch Verbindungen (80) mit dem Messsystem (9) verbunden sind, wobei die Tangentialsensoren (71, 72, 73, 74, 75, 76) geeignet sind, eine Messung der Veränderungen ΔLi des Umfangs Li bereitzustellen, wenn der Prüfkörper (5) einem homogenen Verformungsfeld unterliegt, wobei der Verformungstensor ε, dem der Prüfkörper (5) unterliegt, ein symmetrischer Tensor ist, der durch die Matrixbeziehung {ε}= |Q| {ΔL} bestimmt wird, wobei {ε} den 6-dimensionalen Vektor definiert, der die sechs unbekannten Terme des Verformungstensors ε neu gruppiert, Q eine invertierbare 6 x 6 quadratische Matrix definiert, die nur von der Orientierung der Ebenen (Pi) abhängt und daher unabhängig von der Wirtsstruktur (2) und ihrem Verformungszustand ε₀ ist und {ΔL} ein 6-dimensionaler Vektor ist, der als Komponenten die Variationen ΔLi aufweist,
wobei die Vorrichtung (1) zudem **dadurch gekennzeichnet ist, dass** das Messsystem (9) eingerichtet ist, den Verformungstensor ε₀, dem die Wirtsstruktur (2) unterliegt, analytisch aus dem Verformungstensor ε zu berechnen.

2. Dreidimensionale Vorrichtung (1) nach Anspruch 1, wobei die Ebenen (Pi) durch den Mittelpunkt (O) des Prüfkörpers (5) verlaufen.

3. Dreidimensionale Vorrichtung (1) nach Anspruch 2, wobei die Tangentialsensoren (71, 72, 73, 74, 75, 76) in Ebenen angeordnet sind, die senkrecht zu den Normalen der Flächen eines regelmäßigen Dodekaeders mit demselben Mittelpunkt (O) wie die Kugel (S) stehen.

4. Dreidimensionale Vorrichtung (1) nach einem der Ansprüche 1 bis 3, wobei die physikalischen Ringe (71, 72, 73, 74, 75, 76) durch die Verbindungen (80) an einem einzigen Punkt (U) miteinander verbunden sind, wobei die Verbindungen (80) in einer zentralen Hülle (81) zusammengefasst sind, die mit dem Messsystem (9) verbunden ist.

5. Dreidimensionale Vorrichtung (1) nach einem der Ansprüche 1 bis 4, wobei das Messsystem (9) dazu eingerichtet ist, die Tangentialsensoren (71, 72, 73, 74, 75, 76) zu stimulieren.

6. Dreidimensionale Vorrichtung (1) nach einem der Ansprüche 1 bis 5, wobei der Prüfkörper (5) eine massive Kugel ist.

7. Dreidimensionale Vorrichtung (1) nach einem der Ansprüche 1 bis 5, wobei die Wirtsstruktur (2) aus einem kaltgeformten Material besteht, wobei der Prüfkörper (5) aus 6 Ringen (51, 52, 53, 54, 55, 56) besteht, die so angeordnet sind, dass sie eine Struktur (5') bilden, die die Kugel (S) mit Mittelpunkt (O) definiert, wobei jeder Ring (51, 52, 53, 54, 55, 56) mit einem Tangentialsensor (71, 72, 73, 74, 75, 76) versehen ist, der aus einer optischen Faser, einem elektrischen Kabel oder einem piezoelektrischen Kabel besteht, wobei die Struktur (5') als Prüfkörper (5) fungiert.

## Claims

1. Three-dimensional device (1) for locally measuring the deformations of a host structure (2) which is made of a solid, liquid, viscous or gaseous material, said device (1) comprising:
- a test body (5) in the form of a sphere (S) with center (O) made of a homogeneous resilient material known mechanical properties, said test body (5) being intended to be included in said host structure (2),
- deformation measurement means (7) attached to said test body (5) so that the deformations undergone by said test body (5) are transmitted to said deformation measurement means (7), and
- a measurement system (9) suitable for both detecting signals from said measurement means (7) which are representative of deformations of said deformation measurement means (7), and determining the local deformations of said host structure (2) from the detected signals and the known mechanical properties of the materials of the test body (5) and optionally of the host structure (1),
- means (8, 80, 81) for connecting said deformation measurement means (7) to said measurement system (9),
said device (1) being **characterized in that** said deformation measurement means (7) consist of a three-dimensional deformation sensor comprising at least six tangential sensors (71, 72, 73, 74, 75, 76) which describe circles of perimeters Li defined by the intersection between planes (Pi) and said sphere (S), said planes (Pi) being separate, i being an integer varying between 1 and 6, said tangential sensors (71, 72, 73, 74, 75, 76) being physical rings consisting of optical fibers, or electric cables or piezoelectric cables, said physical rings (71, 72, 73, 74, 75, 76) being linked by connections (80) to said measurement system (9), said tangential sensors (71, 72, 73, 74, 75, 76) being capable of giving a measurement of the variations ΔLi of the perimeter Li when said test body (5) undergoes a homogeneous deformation field, the deformation tensor ε undergone by said test body (5) being a symmetric tensor determined by the matrix relation {ε}= |Q| {ΔL}, with {ε} defining the vector of dimension 6 grouping the six unknown terms of the deformation tensor ε, Q defining an invertible 6 x 6 square matrix, depending solely on the orientation of the planes (Pi) and therefore independent of said host structure (2) and its state of deformation ε₀ and {ΔL} being a vector of dimension 6 having as its components the variations ΔLi,
said device (1) also being **characterized in that** said measurement system (9) is suitable for analytically calculating the deformation tensor ε₀ undergone by said host structure (2) from the deformation tensor ε.

2. Three-dimensional device (1) according to claim 1, wherein said planes (Pi) pass through the center (O) of said test body (5).

3. Three-dimensional device (1) according to claim 2, wherein said tangential sensors (71, 72, 73, 74, 75, 76) are arranged in planes perpendicular to the normals of the faces of a regular dodecahedron with the same center (O) as said sphere (S).

4. Three-dimensional device (1) according to any one of claims 1 to 3, wherein said physical rings (71, 72, 73, 74, 75, 76) are interconnected at a single point (U) by said connections (80), said connections (80) being gathered into a central sheath (81) which is connected to said measurement system (9).

5. Three-dimensional device (1) according to any one of claims 1 to 4, wherein said measurement system (9) is suitable for stimulating said tangential sensors (71, 72, 73, 74, 75, 76).

6. Three-dimensional device (1) according to any one of claims 1 to 5, wherein said test body (5) is a solid sphere.

7. Three-dimensional device (1) according to any one of claims 1 to 5, wherein said host structure (2) is made of a cold-formed material, the test body (5) consisting of 6 rings (51, 52, 53, 54, 55, 56) arranged so as to form a structure (5') defining the sphere (S) of center (0), each ring (51, 52, 53, 54, 55, 56) being provided with a tangential sensor (71, 72, 73, 74, 75, 76) consisting of an optical fiber, or an electric cable or a piezoelectric cable, said structure (5') serving as the test body (5).
